Europäisches Patentamt

European Patent Office

Office européen des brevets

(19)

(11) Publication number:  **0 266 427**
**A1**

## (12) EUROPEAN PATENT APPLICATION
published in accordance with Art. 158(3) EPC

(21) Application number: **87902711.8**

(22) Date of filing: **09.04.87**

Data of the international application taken as a basis:

(86) International application number:
**PCT/JP87/00220**

(87) International publication number:
**WO87/06171 (22.10.87 87/23)**

(51) Int. Cl.³: **B 23 Q 16/02**

(30) Priority: **09.04.86 JP 80022/86**

(43) Date of publication of application:
**11.05.88 Bulletin 88/19**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **IWAGAYA, Takashi Fanuc Hinoshataku 205**
**3-27, Tamadaira**
**Hino-shi Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **TURRET DIVIDING DEVICE DRIVEN BY HYDRAULIC MOTOR.**

(57) A turret dividing device which makes it possible to set easily a position where a turret (2), which is approaching a tool selection position at which machining by means of a selected tool is carried out, begins to slow down. Tool selection position and magnitude of slow down interval are set in advance through a manual data input device (17). Following the turn of the turret for proceeding to the next machining process, a reversible counter (5) counts pulses outputted from a pulse coder (4). A microcomputer (10) performs a closing operation of a flow rate control valve (8) through a valve driving means (6) when it discriminates that the turret has arrived at a slow-down start position on the basis of the result of comparison between a value obtained by deducting the magnitude of slow-down interval from the tool selection position and counting value of a counter. As a result, supply of pressure oil to a hydraulic motor decreases, causing the turret to slow down.

FIG.1

## S P E C I F I C A T I O N
## A TURRET INDEXING APPARATUS DRIVEN
## BY MEANS OF AN OIL HYDRAULIC MOTOR

### Technical Field

The present invention relates to a turret indexing apparatus driven by means of an oil hydraulic motor in a turret lathe.

### Background Art

In a turret lathe having a turret mounted with a number of tools, the turret is moved away from a working position when it proceeds from one working process to another process in the next stage. Subsequently, the turret is rotated to a required rotational position to select a tool to be used in the next working process, and is then moved to the working position. A prior art turret indexing apparatus, using an oil hydraulic motor as a drive source for rotating the turret, comprises a flow control valve for controlling the flow rate of pressure oil supplied to the oil hydraulic motor, a limit switch for setting the rotational position of the turret in which the valve is to be opened or closed, and a cam board rotatable in one with a turret shaft and formed with a cam for controlling the opening of the flow control valve in a closed state. When the turret reaches a limit switch activating position short of the required rotational position, the limit switch is turned on to start closing the flow control valve. Thereafter, the opening of the valve is gradually narrowed down to reduce the speed of the oil hydraulic motor, so that the turret is decelerated. When the turret reaches the required rotational position, moreover, the valve is fully closed, thereby stopping the oil hydraulic motor.

At the same time, an index head on the turret shaft is locked by means of a clamp pin or the like so that the turret is locked to the required rotational position.

In the conventional indexing apparatus described above, the location of the limit switch must be adjusted in changing a turret deceleration start position. This adjustment work is troublesome.

Disclosure of the Invention

Accordingly, the object of the present invention is to provide a turret indexing apparatus driven by means of an oil hydraulic motor, in which a deceleration start position for a turret can be readily changed, and turret indexing can be easily accomplished.

In order to achieve the above object of the present invention, there is provided a turret indexing apparatus which has an oil hydraulic motor for rotating a turret, and valve drive means for opening and closing a flow regulating valve used to adjust the flow rate of pressure oil supplied to the oil hydraulic motor, and is adapted to reduce the flow rate of the pressure oil to decelerate the turret before the turret reaches a tool selection position in which a selected tool is operated for working, thereby locating the turret in the tool selection position, the apparatus comprising a pulse coder adapted to produce output pulses as the turret rotates, a reversible counter for counting the output pulses of the pulse coder and delivering a count value indicative of the rotational position of the turret, setting means for setting the tool selection position and a deceleration section length, memory means for storing the tool selection position and the deceleration section length set by the setting means, and decision means for comparing the count value in the reversible counter with a value obtained by subtracting the deceleration section length from a value for the tool selection position, thereby determining whether the turret has reached a deceleration start position, the valve drive means being adapted to be driven when the decision means detects the arrival of the turret at the deceleration start position.

According to the present invention, as described above, turret indexing can be easily performed by only setting the tool selection position and the deceleration section length by means of the setting means, without requiring any troublesome work, such as correction of the mounting position of a cam, which have conventionally been needed.

### Brief Description of the Drawings

Fig. 1 is a schematic diagram showing the principal part of a turret indexing apparatus according to an embodiment of the present invention; and

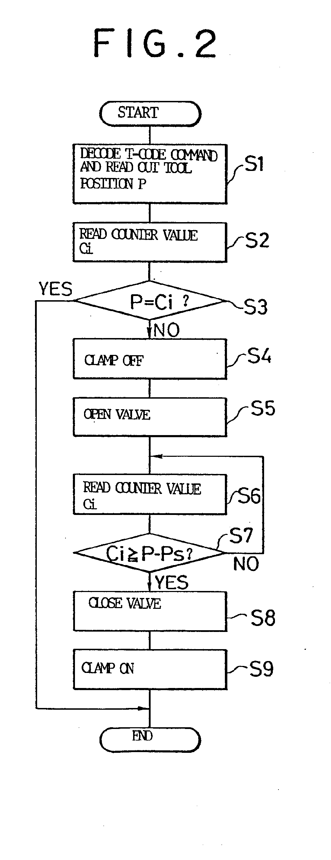

Fig. 2 is a flow chart showing the processing operation of the apparatus of Fig. 1.

### Best Mode of Carrying Out the Invention

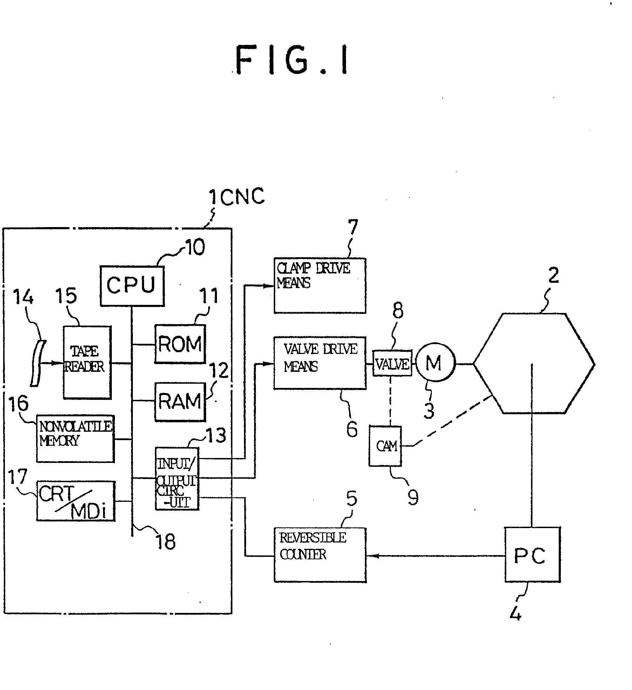

Fig. 1 shows the principal part of a turret indexing apparatus according to an embodiment of the present invention used in a turret lathe. In Fig. 1, numeral 1 denotes a numerical control unit (hereinafter referred to as CNC) having therein a microcomputer for controlling the turret lathe. Numerals 2 and 3 denote a turret, which is mounted with a number of tools, and an oil hydraulic motor for rotating the turret 2, respectively. Numeral 4 denotes a pulse coder for detecting the rotational position of the turret 2 which is mounted on a turret shaft (not shown). The pulse coder 4 outputs, for example, 3,000 pulses while the turret 2 makes one revolution, and also delivers an output signal indicative of the rotating direction of the turret 2. Numeral 5 denotes a reversible counter which counts the output pulses from the pulse coder 4. When the counter 5 has counted the pulses for one revolution of the turret, e.g., 3,000 pulses, it clears the count value to zero. Numeral 6 denotes valve drive means which is interposed between the oil hydraulic motor 3 and a pressure oil source (not shown), and is adapted to open and close a flow regulating valve 8, which is used to adjust the amount of pressure oil supply to the motor. The valve drive means 6 is composed of an electromagnet or the like. Numeral 9 denotes conventional cam means for restricting the closing action of the valve 8. The means 9 is rotatable in one with the turret 2. The cam surface of the cam means 9 has a shape such so that the degree of restriction on the valve closing action is gradually lowered as the turret 2 rotates within its deceleration range (mentioned later), and that the valve closing action is released from the restriction to allow the valve 8 to be fully closed when the turret 2 reaches a tool selection position (mentioned later).

Moreover, numeral 7 denotes clamp drive means which is used to drive a clamp pin (not shown) for positioning the turret 2. The clamp pin is detachably fitted in a recess of an index head (not shown) which is mounted on the turret shaft. The drive means 7 is composed of an electromagnet or the like.

The CNC 1 includes a microcomputer (hereinafter referred to as CPU) 10, a ROM 11 for storing a control program, and a RAM 12 utilized for temporary storage of data. Further, the CNC 1 includes an input/output circuit 13, which is connected to the clamp drive means 7, the valve drive means 6, the reversible counter 5, etc., a tape reader 15 for reading a working program from a tape 14, a nonvolatile memory 16 for storing various set values and the like, and a manual-data input device with a CRT display (hereinafter referred to as CRT/MDi) 17 used to set various data and input various commands. These elements 10 to 13 and 15 to 17 are connected by means of a bus 18.

The operation of the turret indexing apparatus according to the present embodiment will now be described. First, an operator operates the CRT/MDi 17 to set mounting positions or tool selection positions $P_j$ ($j = 1, 2, \cdots \cdots, n$) at which the individual tools are mounted on the turret 2. Also, the operator sets and stores a deceleration section length $P_s$ in the nonvolatile memory 16. At the start of working, the CPU 10 reads the working program from the tape reader 15. When it decodes a T-code, a command for tool replacement, the CPU 10 reads out, from the nonvolatile memory 16, a tool selection position P corresponding to a tool designated by the T-code (Step S1). Then, the CPU 10 reads a present rotational position $C_i$ of the turret 2 from the reversible counter 5 (Step S2). When the machine is connected to the power supply, the position of the turret 2 having so far been stored in the nonvolatile memory 16 is preset in the reversible counter 5.

Thereafter, the tool selection position P read out from the memory 16 and a count value $C_i$ in the reversible counter 5, indicative of the present rotational position of the turret 2, are compared (Step S3). If the two values agree with each other, it is concluded that the designated tool has been selected, and the operation for the tool selection ends.

If the values are not coincident, on the other hand, the CPU 10 drives the clamp drive means 7 so that the clamp pin is disengaged from the recess of the index head fixed on the turret shaft, thereby releasing the turret 2 from clamping (Step S4). Thereafter, the CPU 10 delivers a command for valve opening to the valve drive means 6 (Step S5). On receiving this command, the valve drive means 6 is actuated to open the valve 8, so that pressure oil is supplied to the oil hydraulic motor 3. As a result, the turret 2, along with the oil hydraulic motor 3, rotates in a desired rotating direction. As the turret 2 rotates in this manner, the pulse coder 4, which serves to detect the rotation of the turret 2, delivers output pulses and an output signal indicative of the rotating direction. With the output of each pulse, the reversible counter 5 performs an addition or subtraction depending on the rotating direction of the turret 2. The CPU 10 reads the count value $C_i$ in the reversible counter 5 (Step S6), and compares the value $C_i$ with a value obtained by subtracting the set acceleration section length Ps from a value for the tool selection position P (Step S7). The CPU 10 repeats Steps S6 and S7 until the value $C_i$ in the reversible counter 7 becomes equal to or greater than the calculated value (P - Ps).

When the value $C_i$ in the reversible counter 5 becomes equal to or greater than the calculated value (P - Ps), that is, when the turret 2 reaches a deceleration region short of the tool selection position P by the deceleration section length Ps, the CPU 10 delivers a command for valve closing. At the same time, the CPU 10 de-energize the clamp drive means 7, thereby urging the clamp pin in its engaging direction, so that the turret 2 can be clamped by means of the pin (Steps S8 and S9). On receiving the valve closing command, the valve drive means 6 causes the valve 8 to close. At this time, the cam means 9, which is adapted to rotate together with the turret shaft, operates so as to restrict the closing action of the valve 8, and to gradually lower the degree of restriction on the valve closing action as the turret 2 rotates within the deceleration range. As the turret 2 and the cam rotate, therefore, the opening of the valve 8 decreases gradually. As a result, the rotational speed of the oil hydraulic motor 3 is reduced, and when the tool selection position P is reached, the valve 8 is fully closed, so that the oil hydraulic motor 3 is stopped. In the deceleration range, moreover, the clamp pin is urged to engage the index head as the clamp drive means 7 is deenergized. When the turret 2 reaches the tool selection position P, therefore, the clamp pin is fitted into the recess of the index head rotating together with the turret 2. Thus, the index head and the turret are clamped, and the indexing operation of the turret 2 is finished.

Since the turret indexing apparatus operates in the manner described above, the deceleration position can be easily changed for correction by only varying the set value of the deceleration section length Ps by means of the CRT/MDi. If the turret is replaced with another one, moreover, the turret indexing can be easily performed by only setting the tool selection position P and the deceleration section length Ps by means of the CRT/MDi, according to the type of the turret.

CLAIMS

1. In a turret indexing apparatus which has an oil hydraulic motor for rotating a turret, and valve drive means for opening and closing a flow regulating valve used to adjust the flow rate of pressure oil supplied to said oil hydraulic motor, and is adapted to reduce the flow rate of said pressure oil to decelerate the turret before the turret reaches a tool selection position in which a selected tool is operated for working, thereby locating the turret in said tool selection position, a turret indexing apparatus driven by means of an oil hydraulic motor, comprising:

a pulse coder adapted to produce output pulses as said turret rotates;

a reversible counter for counting the output pulses of said pulse coder and delivering a count value indicative of the rotational position of the turret;

setting means for setting said tool selection position and a deceleration section length;

memory means for storing the tool selection position and the deceleration section length set by said setting means; and

decision means for comparing the count value in said reversible counter with a value obtained by subtracting the deceleration section length from a value for the tool selection position, thereby determining whether the turret has reached a deceleration start position,

said valve drive means being adapted to be driven when said decision means detects the arrival of the turret at the deceleration start position.

2. A turret indexing apparatus driven by means of an oil hydraulic motor according to claim 1, further comprising cam means rotatable in one with the turret, said cam means being adapted to restrict the valve closing operation of said flow regulating valve by said valve drive means when the turret is situated in a deceleration section.

3. A turret indexing apparatus driven by means of an oil hydraulic motor according to claim 2, wherein said cam means gradually relaxes the restriction on the valve closing operation as said turret rotates when the turret is situated in said deceleration section.

4. A turret indexing apparatus driven by means of an oil hydraulic motor according to claim 1, wherein the count value in said reversible counter is restored to an initial value with every revolution of the turret.

5. A turret indexing apparatus driven by means of an oil hydraulic motor according to claim 1, 2 or 3, wherein said apparatus is attached to a turret lathe.

# FIG.I

# F I G . 2

```
        ┌──────────┐
        │  START   │
        └──────────┘
             │
   ┌──────────────────────┐
   │ DECODE T-CODE COMMAND │ ── S1
   │ AND READ OUT TOOL     │
   │ POSITION P            │
   └──────────────────────┘
             │
   ┌──────────────────────┐
   │ READ COUNTER VALUE    │ ── S2
   │ Ci                    │
   └──────────────────────┘
             │
           ◇ P=Ci ? ── S3
   YES ─────┤
            │ NO
   ┌──────────────────────┐
   │ CLAMP OFF            │ ── S4
   └──────────────────────┘
             │
   ┌──────────────────────┐
   │ OPEN VALVE           │ ── S5
   └──────────────────────┘
             │
   ┌──────────────────────┐
   │ READ COUNTER VALUE    │ ── S6
   │ Ci                    │
   └──────────────────────┘
             │
           ◇ Ci ≧ P-Ps? ── S7
            │ NO (loop back to S6)
            │ YES
   ┌──────────────────────┐
   │ CLOSE VALVE          │ ── S8
   └──────────────────────┘
             │
   ┌──────────────────────┐
   │ CLAMP ON             │ ── S9
   └──────────────────────┘
             │
        ┌──────────┐
        │   END    │
        └──────────┘
```

Flowchart steps:

- START
- S1: DECODE T-CODE COMMAND AND READ OUT TOOL POSITION $P$
- S2: READ COUNTER VALUE $C_i$
- S3: $P = C_i$ ? — YES → END; NO ↓
- S4: CLAMP OFF
- S5: OPEN VALVE
- S6: READ COUNTER VALUE $C_i$
- S7: $C_i \geqq P - P_s$ ? — NO → back to S6; YES ↓
- S8: CLOSE VALVE
- S9: CLAMP ON
- END

# INTERNATIONAL SEARCH REPORT

International Application No **PCT/JP87/00220**

**0266427**

## I. CLASSIFICATION OF SUBJECT MATTER (if several classification symbols apply, indicate all) 3

According to International Patent Classification (IPC) or to both National Classification and IPC

Int.Cl⁴      B23Q16/02

## II. FIELDS SEARCHED

| Minimum Documentation Searched 4 | |
|---|---|
| Classification System | Classification Symbols |
| IPC | B23Q16/02 |

| Documentation Searched other than Minimum Documentation to the Extent that such Documents are Included in the Fields Searched 5 | |
|---|---|
| Jitsuyo Shinan Koho | 1965 - 1987 |
| Kokai Jitsuyo Shinan Koho | 1971 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, A, 59-192444 (Hitachi, Ltd.) 31 October 1984 (31. 10. 84) (Family: none) | 1-5 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 3 | Date of Mailing of this International Search Report 2 |
|---|---|
| June 20, 1987 (20. 06. 87) | July 6, 1987 (06. 07. 87) |
| International Searching Authority 1 | Signature of Authorized Officer 20 |
| Japanese Patent Office | |

Form PCT/ISA/210 (second sheet) (October 1977)      See notes on accompanying sheet